# EUROPÄISCHE PATENTANMELDUNG

(11) **EP 3 503 358 A1**
(43) Veröffentlichungstag der Anmeldung: **26.06.2019**
(21) Anmeldenummer: 17020589.2
(22) Anmeldetag: 21.12.2017
(51) Int. Cl.: H02K 15/00, H02K 1/16, H02K 1/24, G06F 17/50, H02K 19/10, H02K 19/24, H02K 41/03

(54) **BAUKASTEN FÜR EINE ELEKTRISCHE RINGMASCHINE**

(71) Anmelder: Reimers, Jan-Dirk, 52074 Aachen (DE)
(72) Erfinder: Reimers, Jan-Dirk, 52074 Aachen (DE)

(57) **Zusammenfassung**

Die Erfindung betrifft eine Baugrößenabstufung für eine elektrische Maschine in Form einer Ringmaschine für den Umrichterbetrieb in Ausführung einer Reluktanzmaschine, die als geschaltete oder Synchronreluktanzmaschine betrieben wird, bei der
- mittels mindestens einem, bevorzugt 2, 3 oder 4 und im Sinne des Baukastens noch mehr Statorelementen eine Anordnung der Statorausführung in radialer oder axialer oder kombinierter Ausführung gegenüber der Läuferstruktur gebildet wird,
- symmetrisch oder unsymmetrisch auf den Umfang verteilt sind,
- die Statorblöcke den Ringläufer nur partiell zum Umfang umgeben, der Läufer also nicht vollflächig umfasst wird
- die Wicklungen in Zahnspulenausführung oder verteilter Ausführung alleinig auf den Statorbereich ausgeführt sind,
- der Läuferring in scheibenförmiger oder trommelförmiger Ausführung aus einem Läufertragring und Läufersegmenten besteht und dessen Rotorblechstruktur in Umfangslänge ebenfalls in Segmente aufgeteilt ist
- und die Staffelung des dazugehörigen Baukastens in Abstufungen und in den drei Dimensionen Durchmesser, Baulänge und Segmentanzahl basierend auf einer konstanten Zahnteilung erfolgt.

## Beschreibung

### 1. Problembeschreibung und Stand der Technik

Die vorliegende Erfindung betrifft eine Anordnung einer elektrischen Arbeitsmaschine, die als segmentierte Ringmaschine ausgeführt und in Form einer Baukastenabstufung für den skalierbaren Modulbau vorgesehen ist.

Derartige Anordnungen von Ringmaschinen sind im Stand der Technik der Elektromaschinen bereits in einigen typischen Ausführungen bekannt. Elektromaschinen dienen allgemein zum effizienten und ressourcenschonendem Aufbau von Antrieben. Für jeden Anwendungsbereich haben sich technische Lösungsprinzipien innerhalb der Bauformen der Elektromaschinen etabliert, die entweder branchenspezifisch gewachsen sind oder durch zwingende regulatorische Anforderungen oder auch wirtschaftliche Zwangsbedingungen geformt wurden. Diese Anwendungsanforderungen treffen im Rahmen der konstruktiven Gestaltung auf die Notwendigkeit der Baugruppenbildung, der Modulbauweise oder aber auf Plattformkonzepte, die die wirtschaftliche und damit industrielle Herstellung von Antriebskomponenten durch Komponentenhersteller erst ermöglicht. In diesem Anforderungsfeld bestehen nach wie vor Probleme innerhalb des technologischen Kompromisses der Baugrößen- bzw. Leistungsabstufung der Bauausführung im Rahmen einer Skalierung von Produktreihen.

Gemäß des physikalischen Zusammenhangs P=2*PI*n*M ergibt sich die Antriebsleistung aus Drehzahl x Drehmoment. Während sich die Drehzahl in der Bauform nur limitierend in Form der Grenzdrehzahl der Lagerung, der Eigenfrequenz der Welle und der Fliehkraftbelastung des rotierenden Aufbaus niederschlägt, was sich bauartbedingt recht einfach und kostengünstig lösen lässt, findet sich die Drehmomentanforderung recht direkt in der Luftspaltfläche, dem Luftspaltdurchmesser und der möglichen Luftspalttangentialkraft wieder. Diese technologischen Grenzen lassen sich ebenfalls lösen, führen aber direkt zu kostenintensiven Bauartänderun- gen, wenn ein Antrieb anstatt aus einer hohen Drehzahl seine Leistung aus einem hohen Moment heraus erzeugen soll.
Die erste Art der Modifikation wird der Durchmesser sein, diese Modifikation schlägt sich mit der zweiten Potenz im Gewicht nieder, was die Materialkosten in der gleichen Potenz erhöhen wird, aber auch das erzeugbare Drehmoment. Die zweite Art der Modifikation wird die Baulänge sein, diese wirkt nur linear auf Drehmoment und Kosten. Nun bleibt als dritte Möglichkeit noch die Erhöhung der auf die Bohrungsfläche der Maschine wirkenden Luftspalttangentialkraft. Dies ist mit einer zwingenden Erhöhung des Flusses verbunden, was zu hochausgenutzten Maschine führt, wie sie mittels permanenterregten Synchronmaschinen oder z.B. auch im Läufer mit supraleitenden Synchronmaschinen aufgebaut werden können.
Als weitere limitierende Größe für alle E-Maschinen wirkt die Physik der Wärmeabfuhr der Verlustleistung in den Wicklungen des Stators und des Läufers, den Blechen und/oder den Magneten des Läufers. So muss ein großer Teil des Leistungsgewichtsvorteils bei hoch ausgenutzten Maschinen durch eine zusätzliche Zwangskühlung zurückgekauft werden. Dies gilt insbesondere bei langsam laufenden Großmaschinen da hier die Eigenkühlung nur oberflächenspezifisch und aufgrund der geringen Wirkung der Wellenlüfter geringer ausfällt. Selbst bei einer Zwangskühlung mittels extern angetriebenem Kühlmedium, ein Problem bleibt immer die Entwärmung des Läufers, die bauartbedingt nur über ein gasförmiges Medium mit verminderter Wärmekapazität im Vergleich zu einer Flüssigkeitskühlung erfolgen kann. Die Wicklungen, deren Isolierung, der Läuferkäfig oder die Magneten sind daher in ihrer Ausnutzung im Mittel und in der Spitzenlast durch die Grenztemperatur limitiert. Dies kann bei kurzzeitiger Verwendung in Überlast bei z.B. zeitlich limitierbaren Startanläufen geduldet werden, nicht aber bei Dauerbetrieb, oder sicherheitsrelevanten Bremsvorgängen, bei der z.B. motorisch gebremst werden muss oder eine längere Haltezeit unter Last nötig werden kann.
Weiterhin wirkt bei Antrieben mit großen Luftspaltdurchmessern das oben angesprochene Wärmeproblem derart zusätzlich limitierend, dass sich der Durchmesser des Läufers bedingt durch seinen Differenztemperatur zum Stator, wie er aufgrund der unterschiedlichen Kühlung weder im Anlauf der Maschine bis zum thermischen Gleichgewicht bezogen auf die Leistungsaufnahme, noch innerhalb des thermischen Gleichgewichts, zwischen Läufer und Stator vermieden werden kann, in einem differentiellen Durchmesserwachstum in Höhe der differentiellen Temperatur äußert. Die thermischen Durchmesseränderungen von Läufer und Stator addieren sich zu den Fertigungstoleranzen und betriebsbedingten Verformungen, die gerade bei großen Durchmessern auftreten, hinzu. Diese benötigen ein Aufmaß im Luftspalt für alle erdenklichen Extremwertzustände im Betrieb. Auch dies wirkt einer Maximierung der Tangentialkraftdichte entgegen, da hier der Luftspaltabstand direkt einen Einfluss hat. Die Möglichkeit der Kraftdichteerhöhung reduziert sich auf den Einsatz eines höheren Strombelages (Wärmeerzeugung) und/oder eines Einsatzes von teuren Magneten und Magnetfläche, was wiederum die Kosten erhöht.
Abhängig von den Wunschauslegungsdaten der Maschine muss die Pol- und Zahnzahl des Antriebes angepasst werden, ein weiterer Konstruktionsparameter der in alle vorherigen Überlegungen hineinspielt. Gerade Drehmomentantriebe zeichnen sich durch höhere Polpaarzahlen aus.
Eine Antriebsmaschine muss in die Applikation derart integriert werden, dass sie effizient arbeitet aber auch kostengünstig in der Fertigung ist, dies gilt für alle Antriebskomponenten. Es sind in Einzelanwendungen folgende vorteilhafte Sonderbauformen in Form einer Ringmaschine vorgeschlagen worden:
In der Offenlegungsschrift DE 101 31 113 A1 wird von Hoppe, Matscheko, Wollenberg ein Segmentmotor beschrieben der bei einem klassischen Läufer eines Asynchron-, Synchron- oder Torquemotors im äußeren Statorteil aus mehreren baugleichen Statorsegmenten besteht, auch der Rotor kann segmentiert vorliegen. Hierdurch soll die Fertigung, die Montage, der Transport sowie die Reparatur von Großantrieben vereinfacht werden. Die Segmente sind alle baugleich, eine Leistungsanpassung erfolgt über ein Weglassen oder Summieren der Statormodule. Nicht berücksichtigt wird hier der asym- metrische Zug auf einen Rotor bei segmentierter oder gelückter Aufstellung der Statorblöcke, insbesondere bei rein radialer Bauform der Maschine. Die reduzierte Ausnutzung der Umfangsfläche spart zwar Statorkosten und ermöglicht die Ausführung von z.B. Stützsäulen im Statorbereich, impliziert jedoch eine Überdimensionierung des Läufers was in der Bauart zu erheblichen Kostennachteilen führt. Für die Kühlung und wärmebedingte Luftspaltausdehnung wird keine Empfehlung gemacht, ebenso wenig wird ein Baukastenprinzip über mehrere Größen vorgeschlagen, ein Systemprüfkonzept dessen oder eine Notlaufeigenschaft dargestellt.
In DE 10 2007 002 782 A1 erweitern die Erfinder ihre Grundidee durch die vorteilhafte Verwendung von Linearmaschinenstatorblöcken, welche in gewinkelt angeordneter Form an die rotatorische Ausrichtung des Läufers angepasst werden und welche nun in Form einer Axialflussmaschine oder Radialflussmaschine Verwendung finden. Die Elemente sind vollständig segmentiert und werden als Baukasten über verschiedene Leistungsklassen angeboten. Die Segmente sollen über Einzelumrichter angesteuert werden. Der Läufer kann frei von Permanentmagneten gehalten werden, damit er nicht überdimensioniert wird. Zum Ausgleich der Radialzugkräfte kann eine biradiale oder biaxiale Anordnung der Statorblöcke erfolgen. Die Verwendung bezieht sich auf Asynchron- oder Synchronmaschinen für Stell-, Drehantriebe und Presswerke in rein motorischer Anwendung. Ein Kühlkonzept oder Prüfkonzept wird nicht vorgestellt, ebenso kein Konzept zum Ausgleich von thermischen Ausdehnungen.
In DE 10 2006 013 590 wird der Ansatz auf eine generatorische Ausführung für eine Großscheibenmaschine (Windkraft) übertragen und kombiniert die Elemente eines segmentierten Linearzahnspulenstators mit einem geblechten Läufer. Die Maschine kann als Synchronmaschine betrieben werden und ist mit unterteilten Umrichtern für jedes Segment in Form eines stapelfähigen Systems aufgebaut, über die Wärmeabführung, die Baugruppenbildung oder die geometrische Ausbildung des Systems wird keine Offenlegung getätigt.
In DE 10 2005 060180 wird eine Direktantriebs-Konfiguration für Windkraftanlagen basierend auf doppelseitigen elektrischen Radialfluss-Synchronmaschinen beschrieben, die als Permanentmagnet-(PM)-Maschinen, und alternativ auch als andere elektrische Maschinen, wie z. B. Wickelfeld-Synchronmaschinen oder Schalt-Reluktanzmaschinen ausgeführt werden kann. Der Generator enthält einen Rotor mit einem inneren Rotorabschnitt und einem äußeren Rotorabschnitt und einem doppelseitigen jochlosen Stator. Der jochlose Stator enthält mehrere modulare Blechstapel und ist für einen radialen Magnetfluss ausgelegt. Der jochlose Stator enthält auch mehrteilige Endringe, welche im Wesentlichen den doppelseitigen jochlosen Stator zur Steigerung der mechanischen Steifigkeit umgeben. Die modularen Blechstapel sind als unterschiedliche Kernpakete angeordnet, wobei jedes Kernpaket einen oder mehrere modulare Blechstapel aufweist. Die verwendeten Zahnspulen können unabhängig zum Maschinendurchmesser ausgelegt werden, wobei keine Aussage zur Art und Weise gemacht wird. Ein Kühlkonzept wird vorgestellt, die Einstellbarkeit der Einzelpole wird hervorgehoben, eine Aussage zum Wärmegangsmanagement wird nicht getätigt. In US 2006/0071575 und EP 1 641 101 wird der Ansatz durch einen doppeltwirkenden Stator mit zwei Wicklungsseiten der Zahnspulen und einer dazwischenliegenden Kühlebene für den Stator erweitert und dadurch eine verbesserte Kühlung offenbart. Eine besondere Bauform dessen wird in EP 2 066 005 in Form einer einseitigen Befestigung der außenmantelgekühlten Zahnspulen am Statorrahmen beschrieben, ein Ausgleich zum Wärmegang wird nicht vorgestellt.
In DE 10 2010 010 127 wird eine weitere doppelwirkende Radialflussmaschine auf Basis einer PM-Synchronmaschine vorgestellt. Die Maschine nutzt Zahnspulenwicklung zeigt aber kein Konzept zur Baugruppenlösung oder zu einem Kühlkonzept des Läufers.
In WO2013/120230 wird ein ähnliches System für Reluktanzmaschinen beschrieben, welches sich durch seine doppeltwirkende, Radialflussstruktur als sehr kompakt auszeichnen soll. Ein modularer Baukastenansatz oder ein Kühlkonzept, sowie eine Lösung zum Wärmegang bei der radialen Luftspaltausrichtung sind nicht erkennbar.
Eine weitere Reluktanzmaschine wird in EP 199496 beschrieben, die als Scheibenläufer mit doppeltwirkendem Luftspalt in Axialbauweise aufgebaut ist. Sie verfügt über Einzelspulen, die über die Umfangsfläche verteilt angeordnet sind. Zur einfacheren Erregung können, wie in vielen Lösungen bekannt, Permanentmagnete in den Flusskreis eingebaut werden, die dann mittels der Elektrospulen in ihrer Flusswirkung gesteuert werden können, so auch in WO2008/119055 und US 6342746.
In EP 2 299 563 und EP 2 299 566 werden eine im Stator segmentierte Radialflussmaschine mit Zahnspulen beschrieben, der radiale Magnetfluss bildet innerhalb des Stators ein Ringschluss, durchtritt zweimal den Luftspalt und erzeugt innerhalb eines Statorsegments und dessen dazugehörigen Umrichter eigenständigen Strom unabhängig von weiteren Statorsegmenten. Trotzdem es eine PM-Maschine ist, werden die flussbildenden Teile in den Stator positioniert und der Läufer enthält zur besseren Ausnutzung nur Elektrobleche. Der Stator soll Baugruppen mit Gleichteilen bilden und jeweils eigene Kühl- und Umrichterkomponenten enthalten, Die Spulen können geeignet verschaltete werden und können ein Mehrphasensystem bilden. Die Zahnstruktur des Läufers soll durch seine luftführende Wirkung Kühlung für die Statorelemente erzeugen. Ein baugrößenspezifisches Baukastensystem wird nicht vorgeschlagen, der Wärmegang im Läufer wird nicht berücksichtigt und ein Kraftausgleich zur Kompensation der Polzugkräfte wird nicht offenbart.
In DE 10 2207 050 496 wird in Form einer Synchronmaschine eine doppelwirkende, mehrfach gestapelte Radialflussmaschine vorgestellt, die durch ihre Stapelung eine Durchmesserverringerung bewirken soll. Ein Kühlkonzept wird angesprochen aber nicht eindeutig offenbart. Ein auf die Polgeometrie bezogenes spezifisches modulares Konzept ist nicht erkennbar.
In KR969682B1 wird ein bis zu vierseitig wirkender luftspaltgeregelter Ringgenerator beschrieben, der sich zusätzlich zur elektrischen Antriebserzeugung durch eine Luftspaltlageregelung auszeichnet. Auch hier sollen die Statorsegmente als modulare Gleichteile verteilt auf einem Statorringelement vorliegen, der Läufer wird als segmentierter Ring gefertigt. Zur Kühlung des Aufbaus oder zur Lösung des Wärmegangproblems wird keine Aussage gemacht.

Ein Ringgenerator für Windkraft- anlagen mit berührender Luftspaltführung wird in US2011/014451 und US2013/0200630 offenbart, der mittels Reibrädern die mindestens zwei Statorsegmente in axialer Orientierung einseitig oder zweiseitig wirkend über den Läufer führt. Die axiale Luftspaltführung dient zur Kompensation der thermischen Ausdehnung und der Fertigungstoleranzen.
Ein Ringgenerator mit Speichenstruktur wird in WO2/099950 beschrieben, der in radialer Bauform als Synchronmaschine auch Eisenlos mittels Luftspulen betrieben werden soll. Ein Modulkonzept oder Kühlkonzept, ein Umgang mit dem Wärmegang wird nicht offenbart.
Eine ähnliche Lösung eines Synchron-Ringgenerators, allerdings mit einem segmentierten Statorbereich beschreibt US6064123, auch hier wird keine Aussage zur Modulbauweise, zum Wärmegang oder zur Kühlung gemacht.
Ein doppeltwirkender PM-Axialfluss-Synchrongenerator wird in WO01/06623 beschrieben, der in symmetrisch aufgebauter Form als dreiphasige Maschine inkl. Kühlkonzept vorgeschlagen wird. Der Generator soll und muss zur Stabilität und Lenkung des Flusses durch die Einzelzahnpole vollständig in Kunststoff oder Klebstoff vergossen sein.
Weiterhin sind diverse Prinzipien und Umsetzungslösungen für Magnetlagerungen von Antrieben bekannt, die dennoch in die gleiche Kategorie wie die bereits aufgeführten passen:
In EP 2 161 821 wird z.B. ein koaxial wirkender Generator beschrieben, der mittels zusätzlicher Regelung der Stator-Spulenpaare den Läufer in seiner Lage regeln kann. Aus Platzgründen ist der innere Stator mit weniger Polen ausgestattet als der äußere Statorring, wobei der Polzahlunterschied über den Läuferring zu einer höheren Polwechselfrequenz moduliert wird und dadurch einer Übersetzung gleichkommen soll. Ein Kühlkonzept oder Modulkonzept wird nicht vorgestellt.

Im Ergebnis ist festzuhalten, dass bereits unterschiedliche Ringmaschinen und Bauformkonzepte für Elektromaschinen bekannt sind. Weiterhin ist ein segmentierter Modulbau bekannt, der zudem Spulen als Gleichteile verwendet und bei dem der Stator in unterschiedlicher Erstreckung den Rotor überdeckt. Ein addieren der Rotormodule führt zu einer Leistungsaddition für eine Bauform. Dennoch ist es wünschenswert, diese bekannten Lösungen konstruktiv zu verbessern und im Sinne eines Baukastenkonzepts zu erweitert, damit sie kostengünstiger und leistungsfähiger werden und dadurch erstmalig einer größeren industriellen Verwendung zugeführt werden können.

Das Problem der eingangs beschriebenen Elektromaschinen und auch der Ausführung als doppelseitig wirkende Ringmaschinen (auch Generatoren) ist es, dass die Leistungsdichte zusammen mit dem Wirkungsgrad über die nötige spezifische Wärmeabfuhr bestimmt. Ist die Wärmeentwicklung zu hoch, kann die Maschine als Antrieb oder Generator nicht in der Leistungsdichte betrieben werden, die ihn aufgrund des dann vorliegenden Leistungsgewichts kostengünstig machen würde. Die Maschine muss in seiner Luftspaltfläche vergrößert werden und ist dann deutlich zu schwer und damit teurer als eine klassische Lösung. Die Doppelscheibenwirkung (Innen- und Außenstator) ergibt dann keinen Vorteil, selbst bei einem Lastausgleich.
Das Problem innerhalb der Umsetzbarkeit steht und fällt zunächst mit der Möglichkeit die Maschine (den Läufer und den Stator) in erheblichem Maße thermisch auszulasten und gleichzeitig die Luftspaltkonstanz zu wahren, insbesondere bei einem im Vergleich zum üblichen Maß vergrößerten Luftspaltdurchmesser, wie er bei Ausführungen als Scheiben- oder Ringmaschine mit hohem Moment vorliegen würde.
Bei einer Temperaturdifferenz von 60°C zwischen Läufer und Stator verfügt eine Ringmaschine von 1,2 m Durchmesser über einen Wärmegang von 0,8 Millimeter auf den Durchmesser, bei 2 m sind es entsprechend 1,3 Millimeter. Dieser Wärmegang muss unabhängig von der Maschinenart bei Radialflussmaschinen additiv zu den Fertigungstoleranzen und verformungsbedingten Rundlauftoleranzen berücksichtigt werden, wenn der Luftspalt der Maschine festgelegt werden muss.
Diese technischen Probleme werden in keiner vorliegenden Anmeldung gelöst. Eine Umsetzung ist nicht bekannt.

In allen bekannten Konzepten findet sich ebenfalls kein modularer Aufbau der Maschine und des Umrichters wieder, der z.B. eine industrielle Serienfertigung über verschiedene Maschinengrößen hinweg berücksichtigt. Die Elektromaschinen müssen üblicherweise für jede Leistungsklasse oder Drehmomentklasse und deren Nenndrehzahl neu ausgelegt werden, dadurch werden Serieneffekte verschenkt. Ausgehend von diesem Stand der Technik ist es eine Aufgabe der vorliegenden Erfindung, eine Baukastenanordnung zu schaffen mit dem auf effizientem Wege mittels einer normierten Auslegung eine mehrdimensionale Baugrößenabstufung für eine Maschinenbaureihe geschaffen werden kann.

### 2. Erfindungsgemäße Lösung

Es besteht die Aufgabe einen modularen, segmentierten, mehrpoligen Sonderantrieb für hohe Momente und geringe Drehzahlen zu schaffen und diesen als Baukasten über verschiedene Leistungsstufen hinweg auszuführen, wie er erfindungsgemäß ausgeführt eine Reihe von Vorteilen bietet. Ein "stapelfähiges" oder skalierbares Modul in Form von Elektromaschinen- und Umrichterelementen, welches für eine Baureihe und Varianten dessen von 0,05 bis zu mehreren hundert kW, bevorzugt aber für 0,1 bis 10 kW und / oder von 5 kW bis 500 kW eingesetzt werden kann, entspräche diesem Ansatz und wird hierfür im Folgenden näher vorgestellt.
Zur Lösung dieser Aufgabe schafft die vorliegende Erfindung eine mehrdimensionale Anordnung der eingangs genannten Art, die dadurch gekennzeichnet ist, dass sie in ihrer Baugruppeneinteilung und Funktion in hohem Maße applikationsspezifisch ausführbar beziehungsweise wandelbar ist, ohne in ihren Elementen die Standardbaugruppen bei einer Leistungsskalierung zu verändern, weiterhin ist sie thermisch erheblich besser ausnutzbar und derart modular, das sie selbst bei mehrfachem Komponentenausfall ausfallsicher ist und damit als Notlaufsicher eingestuft werden kann. Trotz Modulbauweise können applikationsspezifisch abgestimmte Antriebe aufgebaut werden, die dadurch erfindungsgemäß die thermische Grenzleistung, das Gewicht, den Entwicklungs- und Prüfaufwand und die Komponentenkosten im Vergleich erheblich reduzieren.

Die grundsätzliche Nutzung von Ringmaschinen in ihren diversen Ausführungen ist, wie eingangs beschrieben, nicht neu, hier jedoch werden folgende erfindungsgemäße Elemente ergänzt, die dann folgend zu einem Baukasten für eine Baugrößenabstufung dieser Maschinenart führen:

### Nutzung des Reluktanzprinzips:

Erfindungsgemäß wird eine einseitig oder doppeltwirkende Radial- oder auch Axialflussmaschine, basierend auf einer geschalteten Reluktanzmaschine oder basierend auf einer Synchronreluktanzmaschine mit oder ohne Permanentmagnetunterstützung der Flussbildung, als Ringmaschine ausgebildet, wobei der Stator nur partiell den Umfang des Läufers abdeckt und zumindest aus einem Segmentblock gebildet wird. Es kann auch eine Kombination aus Radial- und Axialflussmaschine, bzw. Transversalflussmaschine Verwendung finden.
Der als Ringelement ausgeführte, geblechte Läufer ist ebenfalls aus einer segmentierten Struktur zusammengesetzt und ist auf einen scheibenförmigen oder trommelförmigen Träger appliziert oder in diesen integriert.

### Bauform einer teilüberdeckten Ringmaschine:

Die erfindungsgemäße Ringmaschine zeichnet sich in Kombination der Segmentierung der Statorblöcke und Vergrößerung der Umfangslänge des Rotors und dadurch im Betrieb temporär nicht aktiv genutzte Bereiche des Rotors und der Ausführung als Reluktanzmaschine dadurch aus, dass diese Kombination derart positiv wirkt, das es betriebs- und bauartbedingt zu einer ungleichen Ausnutzung der Maschine zwischen dem Läuferring und den Statorsegmenten kommt, wenn dieser nicht voll bestückt, oder nur gelückt bestückt ist. Der Stator wird im Vergleich zum Rotor/Läufer spezifisch mit einer höheren Leistung ausgenutzt. Der Stator kann derart betrieben werden, dass er eine Kühlung benötigt. Der Läufer hingegen wird nur in den Segmentbereichen in den er vom Stator überdeckt ist aktiv betrieben und dadurch spezifisch geringer ausgenutzt. Er verfügt als Reluktanzmaschine über eine spezifisch geringere Verlustwärmeentwicklung aber auch über eine effektive Passivkühlung bedingt durch die Eigengeschwindigkeit innerhalb der Umgebungsluft in den nun nicht überdeckten Umfangsbereichen.

### Kühlluftführung in den Luftspalt:

Weiterhin kann der Läufer bauartbedingt seitlich vor dem Stator Umgebungsluft ansaugen und durch den Statorinnenbereich fördern und die Maschine damit innerhalb des Luftspaltes zwangskühlen. Hierzu ist eine geeignete Luftführung auch durch die Läuferstruktur sinnvoll, aber nicht zwingend notwendig. Der Stator kann technologisch gut beherrschbar z.B. mit einer Wasserkühlung versehen werden, der drehenden Läufer aber nicht ohne z.B. eine Drehdurchführung.
In der Ausführung als Reluktanzmaschine fallen keine Kupferverluste im Läufer an und der Ringläufer wird durch weniger Verlustwärme erwärmt, kann allerdings bauartbedingt thermisch höher ausgenutzt werden, da die Werkstoffe dies zulassen würden. Sollte dieser Betrieb thermisch zu einer differentiellen Erwärmung des Läufers führen, was wie beschrieben zu einer unterschiedlichen thermischen Dehnung der Baugruppen führen könnte, so kommen nun die Elemente der vergrößerten Passivkühlung gerade aufgrund der erheblich vergrößerten Abstrahlfläche und Kühlfläche des Läufers in den nicht umschlossenen Bereichen erfindungsgemäß zum Tragen.

### Segmentierung des Stators, vergrößerter Durchmesser:

Der Stator ist segmentiert und verfügt bei gleicher Statorfläche im Vergleich zu einer Standardmaschine mit vergleichbarer Leistung über einen erfindungsgemäß größeren Durchmesser des Luftspaltes, was sich auch in seinem kleineren Verhältnis von Durchmesser/Länge spiegelt. Dadurch wird der Stator mit einer deutlich höheren Umfangsgeschwindigkeit des Läufers und damit mit einer höheren Polwechselfrequenz betrieben, obwohl die Drehzahl im Vergleich zu Standardmaschinen geringer ausfällt. Dieser im Vergleich vergrößerte Radius führt gemäß der Formeln M=FxL [Nm] und P= 2*PI*n*M [Watt) zu einer besseren Nutzung der Luftspalttangentialkraft zur Drehmomentbildung. Die durch die Segmentierung vergrößerten Statorabstände zur wirksamen Drehachse entsprechen mit ihrer Hebellänge damit gleichsam einer Getriebeübersetzung, die hier als Festübersetzung im Sinne eines Hebels für jeden Statorblock wirkt. Dies erfolgt naturgemäß auf Kosten der Drehzahl. Durch die beschriebene Bauform erhält der einzelne Statorblock bei identischer Essonscher-Leistungsziffer, wie heute üblich, ein angemessenes bzw. kostengünstiges Verhältnis aus Breite zu Höhe, was dem B zu D Verhältnis bzw. der Bohrung bei klassischen Maschinen entspricht und trotz des vergrößerten Ringgenerators zu einer ausgewogeneren Auslegung der Wicklungselemente und Pole für einen Statorblock (Segment) führt.

### Anordnung als Baukasten:

Die erfindungsgemäß grundsätzlich segmentierte Bauform der ringförmigen Reluktanzmaschine ermöglicht nun die ebenfalls erfindungsgemäße Baukastenbildung bedingt durch die dadurch mögliche Modularisierung. Die einmalige Auslegung einer Pol- und Zahngeometrie ermöglicht eine Baukastenmethodik und einen Modulbau unter Verwendung dieser dann normierten Pol- und Zahngeometrie mit einer Skalierbarkeit auf mehrere Leistungsgrößen und Drehmomentklassen mittels mehrerer Maschinen, aber dennoch auch einen nach heutigen Maßstäben vollständigen Serienbau der Einzelmodule (Stator und Läufer/Rotor) der Maschine.
So ergibt sich bei einer in bekannter Art und Weise optimiert ausgelegten Maschine eine spezifische Pol- und Zahndimensionierung, die in Bezug auf Polwinkel, Polbreite und -tiefe, Windungszahl, Induktivität, Spannung und Strombelag eine optimale Betriebsführung für einen Nenn-Frequenzbereich bewirkt. Abhängig von der Nenndrehzahl dieser Antriebsauslegung des hier vorgeschlagenen Antriebs ergibt sich bei einer spezifischen Auslegungsgrundfrequenz eine Läuferumfangsgeschwindigkeit, die vom Tragarmdurchmesser und der Polweite abhängig ist. Bei drehzahlabhängiger Wahl des Wirkdurchmessers der Läuferstruktur, gleichsam auch der Hebelarmlänge, kann eine immer identische Umfangsgeschwindigkeit des Antriebs konstruiert werden, die zu einer immer iden- tischen Polwechsel-frequenz führt. Wird hierbei die Polweite, wie beschrieben, und auch die Poltiefe (hier gemeint: die axiale Baulänge der Aktivteile) konstant gehalten, kann die Leistung der Maschine als eine reine Funktion der Luftspaltfläche betrachtet werden. Da die Statoren segmentiert sind, ist es möglich über ein Aufaddieren der Pole, oder eben der Zähne der Statorsegmente, die kraftbildend wirken bei konstanter Poltiefe bzw. Motorscheibendicke eine Leistungsanpassung aufzubauen, die durchmesserneutral ist. Sie wirkt nur auf die summierte Statorsegmentlänge, nicht auf die Umfangslänge des Rotors, wie bei geschlossenen Ringmaschinen heute naturgemäß zwangsverknüpft. Bei einer erfindungsgemäßen Ausführung als segmentiertes, mehrphasiges Zahnspulensystem mit dazu passend gegebener Polzahl kann ein kompletter Leistungsstufenbereich aus dem Addieren der Polzahl, der Anpassung des Läufer-Luftspaltdurchmessers und aus der Baulänge der Maschine aus nur einer Pol- und Zahnauslegung generiert werden.
Bei kleinen Maschinen wird der Statorblock variierend aus Zähnen mit mehreren Wicklungen bestehen und die Blöcke werden summiert. Bei größeren Leistungen werden u.U. Einzelzahnspulen auf einem Träger sinnvoller werden, die das Spulensystem dann ausbilden.
Mit einer Statorzahn- und Polgeometrie mit optimierter Auslegung ist es dann erfindungsgemäß möglich einen Baukasten aufzubauen, der einen sehr großen Leistungs- und Drehzahlbereich abdecken kann, was eine bisher unbekannte Möglichkeit zur Standardisierung und damit Serienfertigung im Elektromaschinenbereich, bei Freiheit der initialen Läuferdurchmesserwahl ermöglicht. Elektromaschinen für vielfältige Antriebe können damit innerhalb eines breiten Leistungsbereiches auf ein Baukastensystem reduziert werden, dies bewirkt Skaleneffekte in der Herstellung und Auslegung. Erst die Gruppierung dieser Module bewirkt die Individualisierung zum speziellen Endprodukt. Die Zahnwicklungen können dadurch im Rahmen einer industriellen Serienfertigung für einen Spannungsbereich hergestellt werden und werden in einem zweiten Schritt durch das Aufaddieren bzw. Aufstapeln zu einer Anzahl von Polen oder Polsegmenten auf die jeweilige Leistung skaliert, die die gewünschte E-Maschine für das jeweilige System benötigt. Hierbei ist es sinnvoll mittels bekannter Auslegung oder auch z.B. unter Verwendung der Ähnlichkeitstheorie mit steigender Leistung des elektrischen Antriebes mehrere Spannungsniveaus gemäß der heute üblichen Staffelung vorzusehen.

Der Luftspaltdurchmesser entspricht damit der bekannten ersten Dimension für eine Baugrößenabstufung im Sinne eines Baukastensystems. Der Durchmesser der Maschine muss im Sinne der Zahn- und Polstruktur ganzzahlig teilbar sein und kann durch anzusetzende Stator-Segmente in dessen Pol- und Zahnstruktur in Stufen erhöht werden.

Die Baulänge entspricht der zweiten, ebenfalls grundsätzlich bekannten Dimension, in der ein Baukastensystem für Elektromaschinen aufgeteilt wird. Die Baulänge kann z.B. durch die Statorhöhe (axiale Länge) bzw. Spulenlänge definiert werden und kann hier ebenfalls einer oder mehrerer geeigneten Auslegungswerten in Stufen entsprechen.

Die nun neue und erfindungsgemäß hinzukommende dritte Dimension der Baukastenabstufung ist die oben beschriebene Ausführung als segmentiertes, mehrphasiges Spulensystem in getrennt vorliegenden Statorsegmenten mit dazu passend gegebener Pol- und Zahnzahl. Damit kann ein kompletter Leistungsbereich nur durch Addieren der Pol- und Zahnzahl bzw. in Form der Segmente erfolgen, in denen eine Gruppe von Zähnen ein Spulensystem bildet. Die Segmente ermöglichen es die gewünschte Leistung durch Addition der Segmente bei einem Rotordurchmesser von einem Segment bis hin zu voll bestückten Maschine zu addieren. Sinnvollerweise wird dies auch wieder in logischen Stufen erfolgen wie fortführen weiter beschrieben wird. Die Summierung der Statorsegmente und Umrichtermodule in ihrer modularen Bauweise führt zur gewünschten Gesamtleistung der Maschine. Auch die Addition von Umrichterblöcken stellt eine einfache Form der Baukastenabstufung innerhalb einer erfindungsgemäßen Baugrößenreihe bereit.

Damit ist es nun erfindungsgemäß möglich in den drei beschriebenen Dimensionen mit nur einer elektrodynamischen Pol- und Zahnauslegung einer Elektromaschine einen sehr großen Leistungs- und Drehzahlbereich abzudecken und diesen in Form eines Baukastensystems aufzubauen. Bei heutigen Maschinen mit Zahnspulenauslegung kann ein gewisser Anteil an Gleichteilen erwirkt werden, bei der hier vorgestellten Lösung besteht der komplette Stator und Rotor aus Gleichteilen oder Gleichteilsegmenten und kann in zwei der drei Baukastendimensionen mehrfach verwendet werden, die Spulen in allen dreien.
Die Bauform und erfindungsgemäße Baukastenabstufung führt dabei in überraschender Art und Weise in ihrer Wirkung zu einer größeren Vielfalt an Motorlösungen trotz Verminderung von Baukosten und Verringerung des Komplexitätsproblems der Teilevielfalt.

In einer Ausführungsvariante der Erfindung wird durch die grundsätzliche Aufteilung in Statorsegmente und deren Wirkweise als unabhängiger Segmentantrieb überdies eine zusätzliche Entkopplung der Polanzahl und Polbreite in Bezug zum Luftspaltdurchmesser möglich. Unter Verwendung der Hebelarmlänge (Durchmesser) als konstruktive Größe ist es erfindungsgemäß erheblich einfacher möglich eine Drehmomentmaschine mit gewünschtem Drehmoment zu gestalten, da die gewählte Polanzahl nur über ein Segment angesetzt werden braucht und nicht geschlossen auf den Umfang ausgelegt werden muss.
In einer weiteren vorteilhaften Wirkung der Erfindung müssen die Reluktanzpole am Läuferring in Bezug zu den Statorpolen nicht im Sinne einer doppelten Polausrichtung orientiert werden. Hierdurch sind mehr Varianten einer Leistungsklasse möglich. Dadurch bieten sich mehr Freiheitsgrade zur Ableitung eines Baukastenprinzips, welches in seiner Umsetzung dann einfacher einer gewünschten Drehmomentabstufung entsprechen kann. Insbesondere kann bei schon vorhandenen Statorstrukturen insbesondere bei festen Polweiten im Rahmen eines Baukastenprinzips eine bessere Anpassung an limitierenden Bauraumabmaße erfolgen, als es eine klassische Ringmaschine nach Stand der Technik ermöglichen würde. Es können Statorlücken mit Absicht erzeugt oder für andere Bauaufgaben genutzt werden. Wie oben beschrieben kann mit dieser Bauvariation z.B. auch Kühlluft in den Luftspalt gefördert werden.

### Beidseitig wirkender Rotor (Innen- und Außenstator):

Die Maschine kann als Außen- oder Innenläufer ausgeführt werden. Der Luftspalt kann und sollte bei einer Bauform mit im Vergleich erheblich vergrößerten Luftspaltdurchmessers stabilisiert werden. Dies erfolgt nicht, wie üblich, durch eine Verstärkung der Tragstruktur, was zu erheblicher Gewichtszunahme führt, sondern erfindungsgemäß durch eine zusätzliche Klappung der Statorfläche nach innen zum Kraftausgleich der radialen Zugkräfte, die ca. ein fünf- bis zehnfaches der Tangentialkräfte der E-Maschine betragen. Der Stator umschließt dann den Läufer sowohl innen, wie außen. Er ist dann beidseitig wirkend. Dies führt zu einer weitgehend neutralen Radialkraft auf den Läufer, wenn die Flächen gemäß ihrer Ausdehnung oder Ausnutzung aufeinander abgestimmt werden. Ein gewisses Maß an Asymmetrie der Luftspaltkräfte kann über die Statik des Läufers und der Tragarme für die Statoren abgefangen werden. Die beiden Maschinenwirkseiten können im Fluss verkettet sein, müssen es jedoch nicht. Dadurch ist eine Bauform als jochlose Maschine oder mit Joch auch in Form einer Transversalflussmaschine möglich. Der Fluss durch die Läuferpole kann radial oder axial erfolgen, er kann mit oder ohne Durchtritt durch den Läufer erfolgen, solange er zum Kraftausgleich im Sinne der Kräfte auf den Läufer in radialer Richtung weitgehend symmetrisch erfolgt. Die Symmetrie kann mittels der Geometrie erreicht werden, oder durch aktive Regelung der Umrichter, was eine außen und innen unabhängige Wicklungsverschaltung benötigt, im anderen Falle nicht.

### Verminderung der Wärmedehnung durch Segmentierung und Dehnfugen:

Erfindungsgemäß kann der Läufer insbesondere in Form der Läuferbleche segmentiert sein, damit die tangentiale Wärmeausdehnung des Läuferrings durch die Segmentspalte unterbrochen ist und durch die baulich getrennt vorliegende Läufertragstruktur maßlich stabil gehalten wird. Es kann sinnvoll sein auch in den Läuferträger Dehnfugen auf Höhe des Luftspaltdurchmessers und der getrennten Läufersegmente vorzusehen.

Die erfindungsgemäße Ringmaschine besteht damit aus einem Läufertragring und Läufersegmenten, die mehr oder minder segmentiert sein können und aus mindestens einem, bevorzugt 2, 3 oder 4 und im Sinne des Baukastens noch mehr Statorelementen die symmetrisch oder unsymmetrisch auf den Umfang verteilt sind. Diese können einseitig wirkend, mit einem Joch beidseitig wirkend oder jochlos mittels zweier nun beidseitig wirkender Spulenpakete angeordnet sein. Der Läufer wird nicht vollflächig umfasst, sondern ist bis auf den Erstreckungsbereich der Statorelemente frei zugänglich. Die Staffelung des dazugehörigen Baukastens erfolgt in Abstufungen der Statorsegmente und in den drei Dimensionen Durchmesser, Baulänge und Segmentanzahl.

### 3. Beschreibung

Diese und weitere Merkmale und Vorteile der vorliegenden Erfindung werden anhand der nachfolgenden Beschreibung verschiedener erfindungsgemäßer Anordnungen unter Bezugnahme auf die beiliegende Zeichnung deutlich. Darin ist:
Figur 1 eine schematische Darstellung einer erfindungsgemäßen Anordnung eines Antriebs gemäß einer prinzipiellen Funktionsausführung als synchron Reluktanzmaschine mit einem äußeren Stator, einem Ringläufer und einem inneren Stator, hier teilweise mit zwei verschiedenen Wicklungsarten dargestellt
Figur 2 eine schematische Darstellung der drehmomentbildenden Luftspaltfläche einer klassischen Torusmaschine nach dem Stand der Technik
Figur 3 eine schematische Darstellung einer hier bevorzugten Anordnung der drehmomentbildenden Luftspaltfläche bei Segmentanordnung einer denkbaren Aus- führungsform einer äußeren und inneren Teilsegmentanordnung der vorliegenden Erfindung
Figur 4 eine schematische Darstellung einer Anordnung mit einem Segment mit konstanter Polweite, Zahnspulen und einem Durchmesser D=1
Figur 5 eine schematische Darstellung einer Anordnung mit einem Segment mit konstanter Polweite, Zahnspulen und einem Durchmesser D=2
Figur 6 eine schematische Darstellung einer Anordnung mit einem Segment mit konstanter Polweite, Zahnspulen und einem Durchmesser D=3
Figur 7 eine schematische Darstellung einer Anordnung gemäß einer denkbaren Ausführungsform einer Läuferstruktur der vorliegenden Erfindung, bestehend aus Läufertragstruktur und hier dargestellt zweier Viertel-Blechpaketen
Figur 8 eine schematische Darstellung der Statorblechsegmente in drei verschiedenen, denkbaren vereinfachten Ausführungen
Figur 9 eine schematische Darstellung des Antriebs mit einem äußeren Viertelsegment-Statorblock, der jeweils zwei Rotorpolbrücken (ein Pol) Abstand zu einem 90° Grad Umfangswinkel aufweist
Figur 10 eine schematische Darstellung des Antriebs mit zwei äußeren Viertelsegment-Statorblöcken, die jeweils zwei Rotorpolbrücken (ein Pol) Abstand (A) zu einem 90° Grad Umfangswinkel aufweisen und zusammen ca. 180° Überdeckung erzeugen
Figur 11 eine schematische Darstellung des Antriebs mit drei äußeren Viertelsegment-Statorblöcken, die jeweils zwei Rotorpolbögen (ein Pol) Abstand zu einem 90° Grad Umfangswinkel aufweisen und zusammen ca. 270° Überdeckung erzeugen
Figur 12 eine schematische Dar- stellung des Antriebs mit vier äußeren Viertelsegment-Statorblöcken, die jeweils zwei Rotorpolbögen (ein Pol) Abstand zu einem 90° Grad Umfangswinkel aufweisen und eine segmentierte Vollmaschine mit zusammen gut 360° Umfangswinkel erzeugen
Figur 13 eine weitere schematische Darstellung des Antriebs mit vier äußeren Viertelsegment-Statorblöcken, die jeweils einen Rotorpolbögen (halber Pol) Abstand zu einem 90° Grad Umfangswinkel aufweisen und eine segmentierte Vollmaschine mit 360° Umfangswinkel erzeugen
Figur 14 eine schematische Darstellung einer Ausführung eines Läufertragringes mit Rotor-Segmentaufnahmen und Wärmeausdehnungsfugen für die Segmentbereiche und einem äußerem Statorsegment mit Aufnahmepunkten und ebenfalls anteiliger Wärmeausdehnungskompensation mittels innerer Aufnahmen
Figur 15 eine schematische Darstellung einer weiteren Ausführung eines Läufertragringes mit Rotorsegmentaufnahmen und Wärmeausdehnungsfugen für die Segmentbereiche, ohne Kühlschaufeln
Figur 16 eine schematische Darstellung des Antriebs mit einem äußeren Statorblock von nahezu 120 Grad und 1/3 Umfangsüberdeckung des Läufers abzüglich einer drittel Polteilung des Läufers als Statorsegmentabstand. Zusätzlich ist die Kühlluftführung skizziert
Figur 17 eine schematische Darstellung des Antriebs aus Figur 16 mit zwei äußeren Statorblöcken von jeweils nahezu 2x120 Grad und jeweils 1/3 Umfangsüberdeckung des Läufers abzüglich einer drittel Polteilung des Läufers pro Statorsegment
Figur 18 eine schematische Darstellung des Antriebs mit drei äußeren Statorblöcken von jeweils 3x120 Grad und 3/3 Umfangsüberdeckung des Läufers durch die Statorsegmente abzüglich des jeweiligen 1/3 Polteilung Abstand zwischen den Statorsegmenten
Figur 19 eine schematische Dar- stellung des Antriebs aus einem Baukasten in einer Ausführung mit zwei Statorsegmenten in einer Einscheibenausführung
Figur 20 eine schematische Darstellung des Antriebs in einer Ausführung mit zwei Statorblöcken pro Läuferscheibe in einer dreifachen Scheibenausführung, gemäß des Baukastens
Figur 21 eine Darstellung der erfindungsgemäßen drei Dimensionen des abgestuften Baukastensystems in Durchmesser, Baulänge und Segmentanzahl, basierend auf einer Pol- und Zahnauslegung mit definierter Umfangsgeschwindigkeit.

Im Folgenden meint die Verwendung des Begriffes E-Maschine oder Antrieb sowohl eine motorisch, wie auch generatorisch arbeitende Elektromaschine. Der Begriff Umrichter meint sowohl einen Halbbrückenumrichter wie auch einen Vollbrückenumrichter, der sowohl netzseitig diodenbestückt und damit nicht rückspeisefähig sein kann, wie auch netzseitig rückspeisefähig ausgerüstet sein kann. Umrichter und Maschine bilden den Antrieb, bzw. das Antriebssystem.

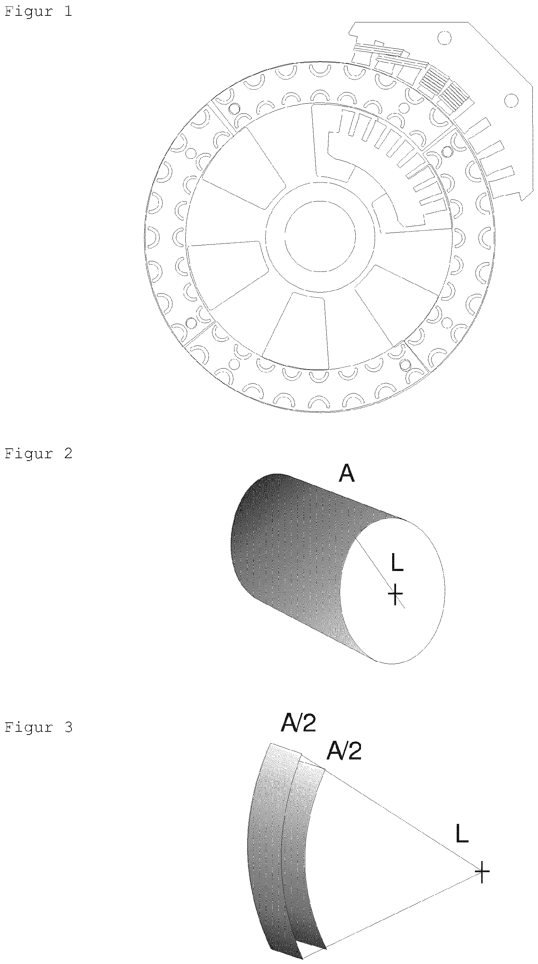

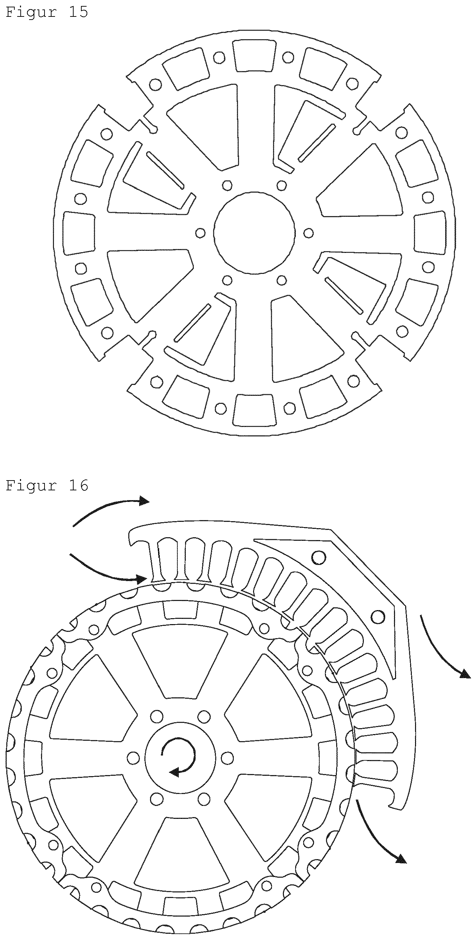

Figur 1 zeigt eine erfindungsgemäße Ausführung als Synchronreluktanzmaschine, mit einem äußeren und einem innerem Statorblock. Die Statorblöck sind hier als Viertelelement ausgeführt, sie können aber auch als Drittelsegment (Figur 16 ff) oder in Form einer anderen Aufteilung zum Läuferring gemäß des Baukastenprinzips aufgeteilt sein.
Eine vorteilhafte Bauform kann es sein, sowohl einen äußeren, wie auch einen inneren Stator zu verwenden, wie es neben Figur 1 und auch 21 dargestellt ist. Dies führt zu einem weitgehend radialkraftfreien Aufbau, insbesondere wenn der innere Stator über mehr Zähne (Fläche) verfügt, als der äußere, sollte dies nötig sein. Der mindestens eine Statorsegmentblock der erfindungsgemäßen Maschinenausführung kann aus Einzelzahnspulen oder aus verflochtenen bzw. verteilten Spulensystemen bestehen, wie es in Figur 1 angedeutet ist.

In bekannter Art und Weise ist in Figur 2 eine schematische Darstellung der drehmomentbildenden Luftspaltfläche A einer klassischen Torusmaschine nach dem Stand der Technik dargestellt. Die abgebildete Fläche A bewirkt mit dem spezifischen Drehschubwert der Maschinenbauform zusammen mit dem Hebelarm L das Drehmoment der Maschine.

In Figur 3 wird die identische Fläche A als zwei halbe Flächen mit vergrößertem Hebelarm L dargestellt. Die Fläche schließt sich dann nicht zu einem Vollkreis sondern bildet einen Abschnitt aus. Der Abschnitt erzeugt ebenfalls mit seiner Fläche A zusammen mit dem spezifischen Drehschub und dem jeweilig wirkenden Hebelarm L das Drehmoment der Maschine.

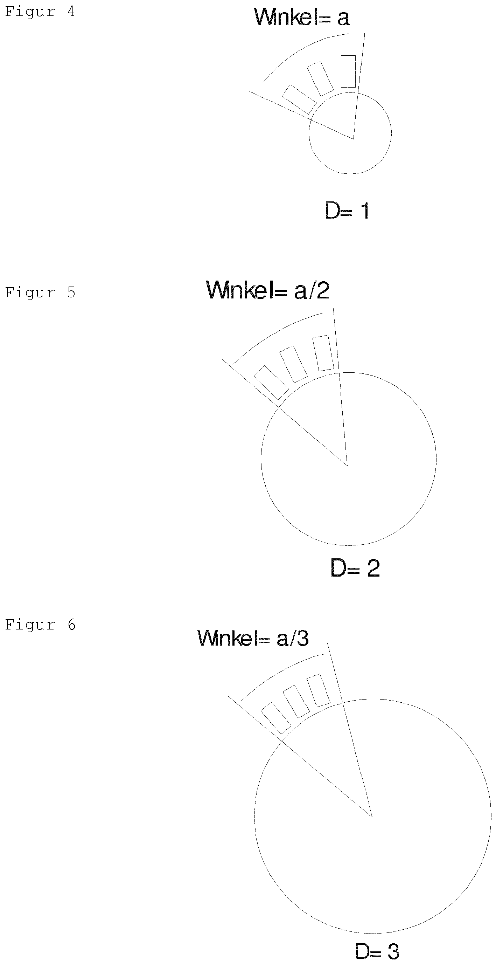

Figur 4 zeigt den Umfangswinkel a einer Ausführung der Fläche A als Kreisumfangsabschnitt in Bezug auf den vollen Umfang des Kreisabschnittes. Der Durchmesser D ist auf 1 normiert.
In Figur 5 wird die gleiche Fläche (bei identischer Bautiefe) bei doppeltem Durchmesser D=2 mit halbem Winkelbetrag a/2, wie in Figur 4 beschrieben. Es ergibt sich dann eine identische Polweite und bedingt durch den doppelten Hebelarm wird das doppelte Drehmoment erzeugt.
In Figur 6 wird die identische Fläche bei dreifachem Durchmesser und gleicher Tiefe mit dem Winkel a/3 beschrieben.
Die flächenspezifische Drehschubdichte bewirkt bei identischer Fläche eine identische Tangentialkraft F, die mit dem Hebelarm L=D/2 multipliziert das Drehmoment ergibt. Die Durchmesserabstufung findet sich dann im Drehmoment abgebildet: M3 = 2xM2 = 3xM1.

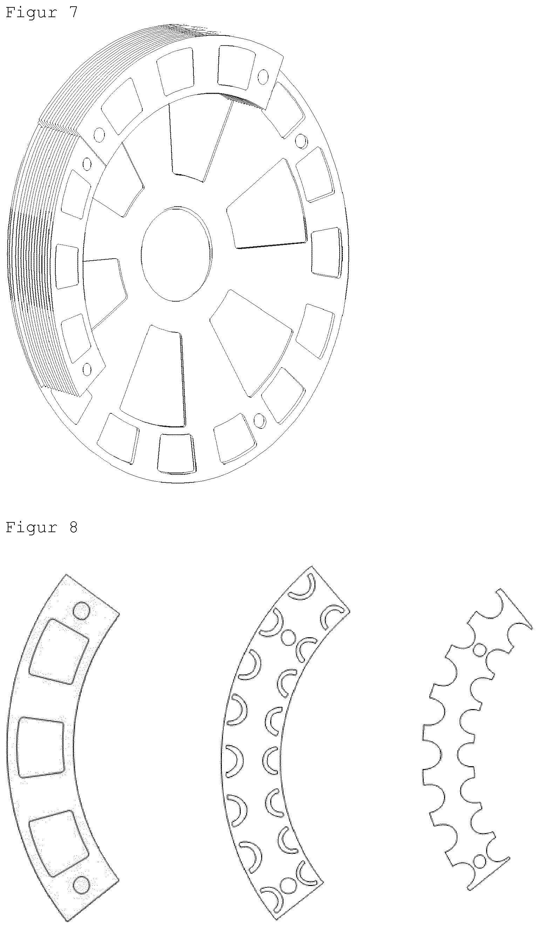

Figur 7 zeigt eine Ausführung des erfindungsgemäßen Maschinenläufers in Ringform. Der Läuferring ist geblecht ausgeführt und enthält weder ausgeprägte Magnetpole noch stromführende Bauteile, weiterhin ist er erfindungsgemäß ebenfalls segmentiert und wird in eine Trägerstruktur eingebunden, die die Lastführung zur Hauptwelle der Maschine darstellt.
In der Läufertragstruktur sind mehrere axiale Durchbrüche, insbesondere ausgebildet als Kanalabschnitte angeordnet, durch die im Betrieb ein Luftstrom durchströmt. Dadurch, dass axial verlaufende Durchbrüche vorgese- hen sind, wird der axiale Luftstrom verbessert bzw. erst ermöglicht. In den Durchbrüchen können zudem Elemente wie Lüfterschaufeln eingebunden sein, wie in Figur 15 dargestellt ist.

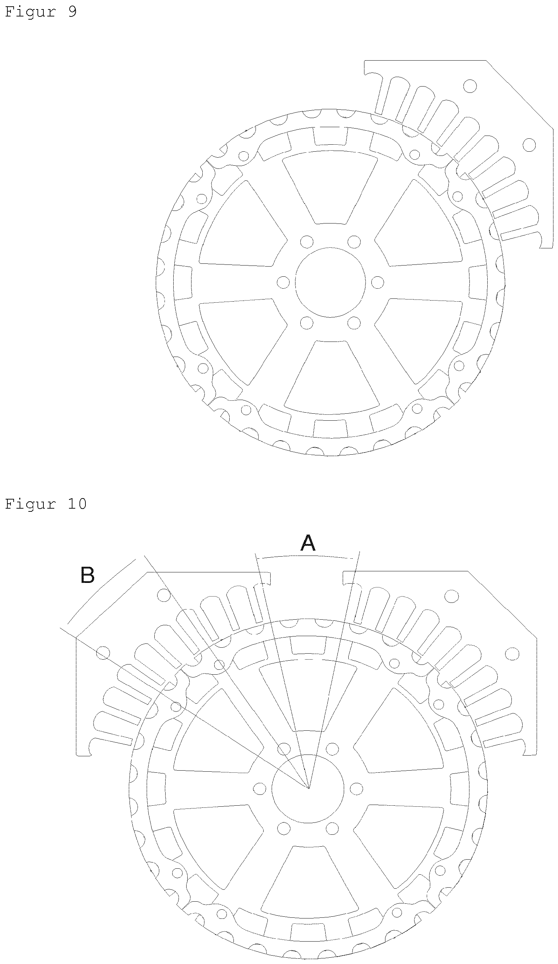

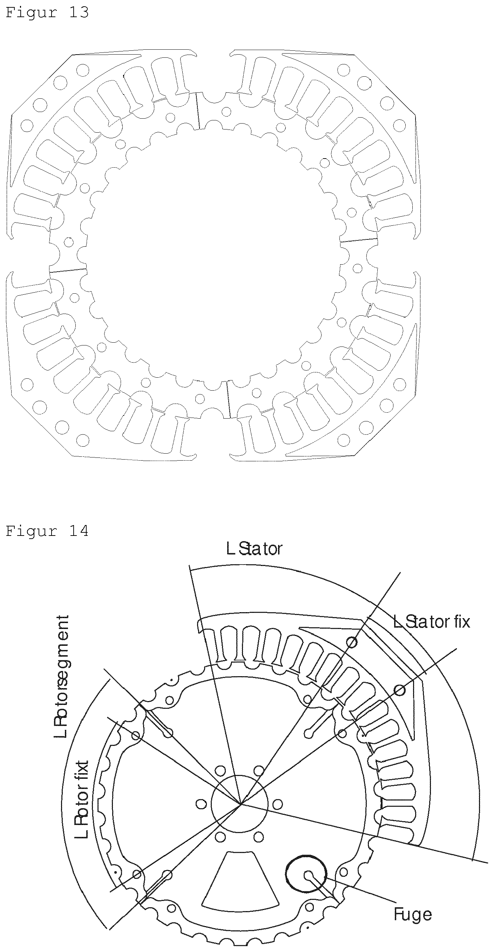

Die Trägerstruktur ist in geeigneter Weise zur Welle oder zu den Läuferblechpaketen elektrisch und/oder thermisch isoliert ausgeführt, um einen Stromfluss und eine schädliche Wärmeabfuhr in die Tragstruktur zu vermeiden. Weiterhin verfügt die Tragstruktur erfindungsgemäß über auf dem Umfang verteilte Einschnitte (Figur 14 und 15, in Bild 14 als Fuge bezeichnet), die zu einer Wärmegangsentkopplung der Blechpakete bezogen auf die Umfangslänge der Blechpakete im inneren und äußeren (doppelten) Luftspalt gegenüber der Tragstruktur führt. Dies verringert im erheblichen Maße die Zunahme des Durchmessers des Ringgenerators bedingt durch die unsymmetrische Aufwärmung des passiv gekühlten Läuferringes gegenüber einer u.U. notwendigerweise zwangsgekühlten und ebenfalls segmentierten Statorstruktur und dessen Haltevorrichtung. Die Blechpaketsegmente können dann in Umfangsrichtung thermisch bedingt in den Spalt wachsen, ohne den Wirkdurchmesser zu erhöhen, da die Blechpakete gleichsam in die spaltbehafteten Einschnitte wachsen und dort eine für den Luftspaltdurchmesser schädliche Längendifferenz kompensieren können. Die Läufersegmentbleche sind dazu ebenfalls zusätzlich mit einem Ausdehnungsspalt beabstandet. Ebenso kann die Trägerplatte thermisch in ihre Einschnitte (Fuge, Bild 14) wachsen. Unterstützt wird dies zusätzlich durch eine nicht endnahe Befestigung der Statorsegmente und Läuferbleche (L Stator > L Stator fix, L Rotorsegment > L Rotor fix), wie sie in Figur 10 (mit B bezeichnet) und 14 dargestellt ist. Dies verringert das durch die Dehnfugen weitgehend rückwirkungsfreie aber vorhandene thermische wachsen der Läuferbleche gegenüber dem Wirkdurchmesser des Gesamtläuferdurchmessers zusätzlich, da die freien Ende rückwirkungsfrei für die Haltevorrichtung thermisch wachsen dürfen.
Erst durch diese Anordnung wird die benötigte radiale kleine Spaltausrichtung der Luftspaltfläche für den Motor auch bei hohen spezifischen Leistungsdichten überhaupt ermöglicht.

Ebenso verfügen die Statorseg- mente über die beschriebene nicht endnahe Befestigung, die die gleiche Wirkung sicherstellt (Figur 14): Die thermische Dehnung wird in ihrer Wirkung auf den Luftspaltdurchmesser und damit auf den Luftspalt anteilig der Hebelarmverhältnisse Lx > L fix vermindert.

Die Läuferbleche müssen in der üblichen Form als flussführend und flussbehindernd einer D/Q-Polstruktur entsprechen. Hier kann mit einfachen Strukturen, wie einfachen oder mehrteiligen Ausschnitten mit und ohne Flussbrücken gearbeitet werden, wie für Synchronreluktanzmaschinen und geschalteten Reluktanzmaschinen bekannt und wie in Figur 8 exemplarisch gezeigt wird. Die axiale Aufteilung der Blechpakte in Bezug zur Tragstruktur (Figur 7, 19 und 20) kann ebenfalls symmetrisch oder asymmetrisch bzw. doppeltwirkend auf beiden Seiten der Tragstruktur erfolgen, so kann eine fliehkraftbedingte Biegung in der Tragstruktur vermindert werden, wenn diese beidseitig von der Tragstruktur mit halbem Hebelarm und auch beidseitig symmetrisch erfolgt. Figur 7, 19 und 20 zeigen jeweils eine asymmetrische, da einseitige Aufteilung.

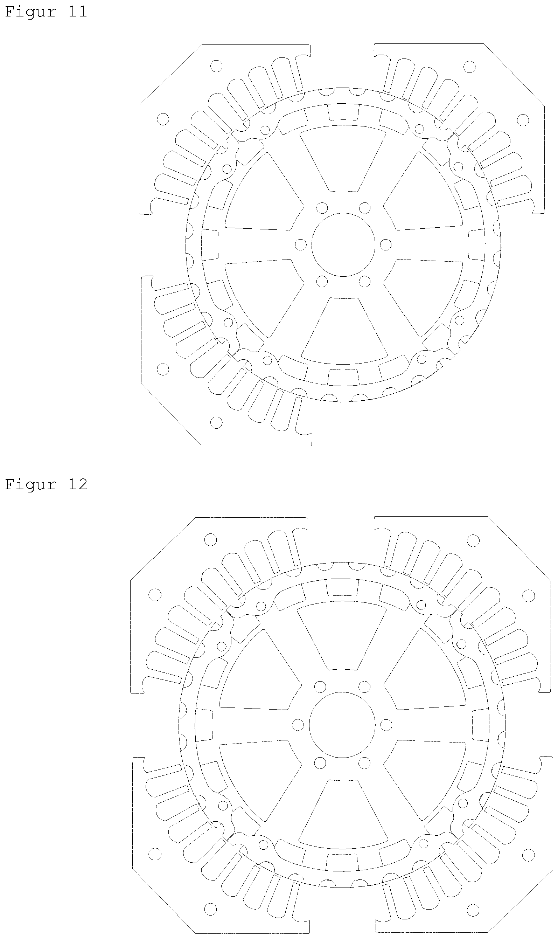

Figur 9 zeigt in nicht limitierender Form eine Bauausführung eines erfindungsgemäßen Maschinenstators in Segmentform, hier ca. 90°, um ein Viertelsegment zu bilden. Das Statorsegment kann exakte 90° bilden und mit leichtem Spalt zum Nachbarsegent montiert werden, oder aber es lässt im Sinne der Pol- und Zahnsymmetrie ein oder zwei Rotorflussbrücken, was hier einem halben oder einem Pol entspricht aus, wie es in Figur 10 mit dem Maß A skizziert ist. Die beiden Statorsegmente in Figur 10 weisen bei gleicher Zahnorientierung zum Läufer einen Abstand von A=2 Läuferpolbrücken auf.
Aufgrund der Besonderheit der Reluktanzmaschine ist hier nicht zwingend immer A=2 anzusetzen, sondern es kann auch nur der einfache Polabstand des Läufers als Segmentabstand verwendet werden, oder ein Bruchteil dessen.
Dieser führt dann im Bereich zwischen zwei Statorblöcken dazu, dass als Lücke zwischen zwei Statoren der 1,5-fache oder 3 - fache Statorzahnabstand (oder einfacher und zweifacher Läuferflussbrückenabstand) oder ganz- zahliges Vielfaches dessen eingestellt werden kann, sollte es sich wie hier um eine 3-phasige Maschine handeln. Dies ist in Figur 13 für vier Segmente mit jeweils 9 Zähnen gezeigt. Die Maschine verfügt über 28 Pole bzw. 14 Polpaare. Jeder Stator mit 9 Zähnen überstreicht 6 Pole, der siebte Pol wird nicht durch einen äußeren Stator überdeckt sondern bleibt hier frei. Es ist demnach eine Maschine mit virtuellen 42 Nuten, bei der nur 4x9 ausgeführt sind. Die Statorblöcke lassen jeweils ein Pol frei. Der Raum kann zur Kühlluftführung in den Luftspalt verwendet werden. Vorteilhafterweise wird der Stator der Maschine aus einem oder mehreren, baugleichen Statorsegmenten (z.B. 30°, 45°, 60°, 90°, 120° bis 180°) über den Umfang des Ringrotors verteilt angeordnet, um ein Baukastensystem zu bilden, wie es in Figur 10 mit zwei Viertel-Segmenten und in Figur 11 mit drei, sowie Figur 12 und auch 13 mit vier Viertelsegmenten für eine Durchmesserreihe beispielhaft dargestellt wird.
Der Stator kann je nach gewünschter Leistung mit 3, 6 oder 9 Statorzähnen (wie in Figur 9 bis 13 gezeigt), mit 12 oder auch 15 Statorzähnen (wie in Figur 14 und 16 bis 18 gezeigt), oder mehr gebaut werden, solange wie hier bei einer 3 phasigen Ausführung die Statorzahnzahl durch die Anzahl der Phasen geteilt werden kann. Eine 2, 4 oder 5-phasige Ausführung wäre ebenso denkbar. Die Segmente können dann in ihrer festgelegten Zahnzahl und Phasenzahl gemäß der Segmenterstreckung auf dem Läuferumfang angeordnet werden, wie es in Figur 9 bis 13 und 16 bis 20 dargestellt ist. Es mag eine dazu abweichende Polzuteilung des Läufers je nach Grundauslegung sinnvoll sein.

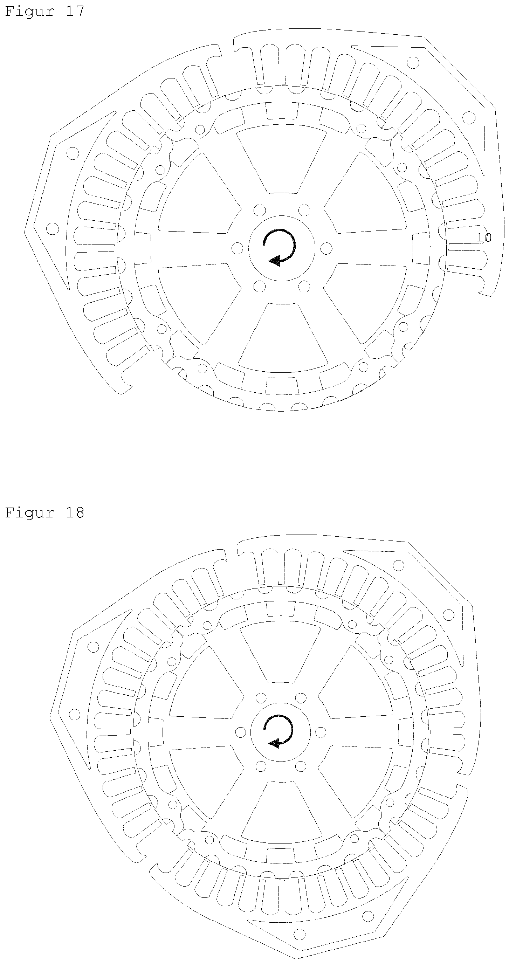

Figur 17 und 18 zeigen eine nicht ganzzahlige Lückung der Statorsegmente, die zu einem Phasenversatz der Statoren zueinander führen, dies muss mit den Umrichtern berücksichtigt werden.

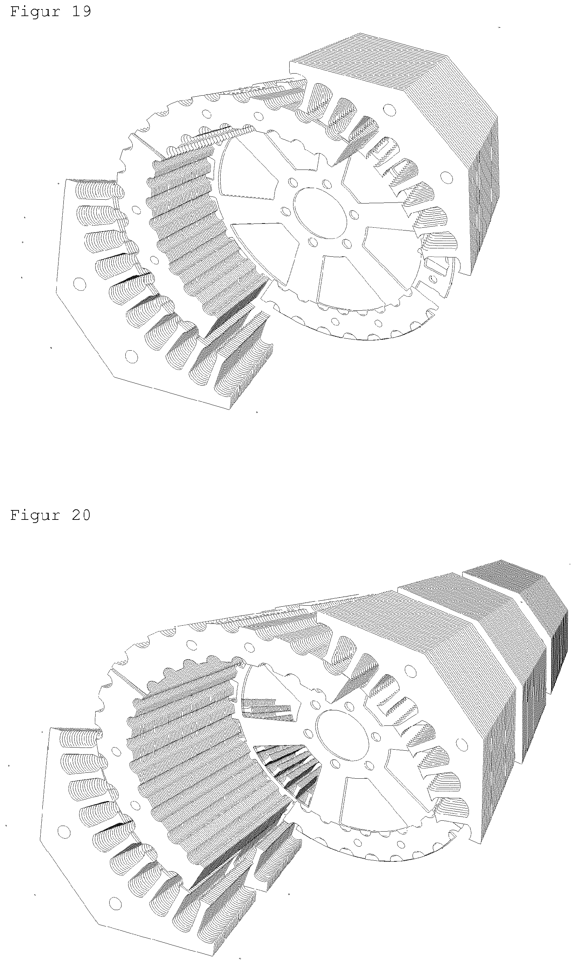

Figur 19 und 20 zeigen Bauausführungen, die in Teilbestückungen die Baulänge sequentiell aufgeteilt darstellen und damit einen elementaren Teil des erfindungsgemäßen Baukastenprinzips darstellen, der die mögliche Individualisierung der Maschine in den Baugrößen trotz Gleichteile zeigt. Der Antrieb kann aus mehreren, baugleichen Statorsegmenten ausgeführt werden, die über den Umfang des ringförmigen Läufers verteilt werden, wie es anwendungsbedingt notwendig sein kann.
Die Statorblöcke können symmetrisch am Läufer verteilt werden, oder asymmetrisch angeordnet werden, wodurch eine indifferente Lagerbelastung vermieden oder eigens erzeugt werden kann.

Die Kühlung wird über alle Baugrößen hinweg durch den eigenen Läufer erfüllt. Der Läufer an sich ist selbstkühlend, da er in Bezug zur Läuferfläche und der Statorfläche im Flächenverhältnis niedriger ausgenutzt ist. Die Zwangsströmung, die der Läufer in und um die Statoren bewirkt, ermöglicht bei geschickter Luftführung (Figur 16) eine vollkommen autarke Kühlung der E-Maschinenkomponenten, so dass nur die Umrichter eine Zwangskühlung benötigen würden. Die Statorsegmente können dazu neben der klassischen Rückseitenkühlung hier auch eine seitliche Kühlflächenausgestaltung erhalten. Diese wird durch den Luftzug des Läufers direkt erreicht und vergrößert die Kühlfläche in erheblichem Umfang. Die reine Rückseitenkühlung heutiger Radialflussmaschinen ist aufgrund des Wärmetransportes aus dem Luftspalt- und Wicklungsbereich bis hin zur Blechpaketrückseite weniger optimal als im Seitenbereich und im Luftspalt selbst. Innerhalb eines radial von Statoren voll umschlossenen Luftspaltes ist der Luftaustausch zudem erheblich reduziert. Gleichzeitig verfügt die stark verwirbelte Spaltströmung jedoch über einen extrem hohen Wärmeübergang, der nicht genutzt wird, da die Luft nicht aus dem umlaufenden Luftspalt gefördert werden kann. Hier erfolgt erfindungsgemäß ein erheblich schnellerer Luftaustausch aus dem Luftspalt heraus und hinein bedingt durch die seitlich vorhandenen Statorsegmentspalte (Figur 10, bezeichnet mit A) selbst bei einer Vollbestückung, die Läufersegmentspalte (Figur 12, 13 und Figur 18) und dessen Luftführung und die Elemente der axialen Durchlüftung (Figur 15) ermöglichen dies.

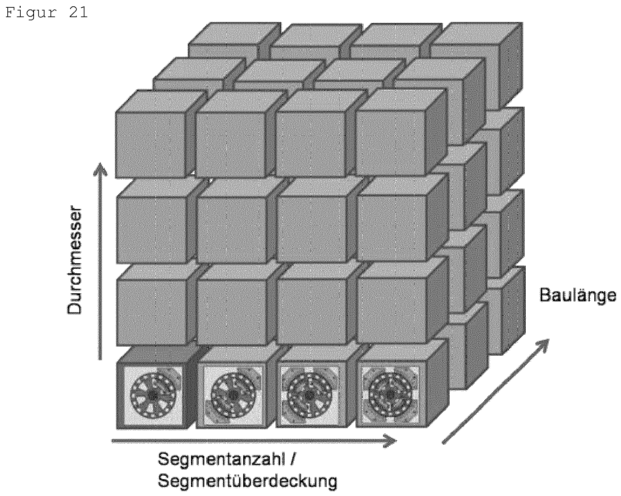

Neben dem Durchmesser und der Baulänge (Figur 19 und 20) kann auf dem Umfang eine dritte Leistungsabstufung für Elektromaschinen abgeleitet werden, die Segmentanzahl. Diese lässt sich in Segmentwinkel und Segmenter- streckung einteilen. Dies ist in Figur 21 dargestellt. Bekannt ist die Abstufung der Leistung gemäß dem Durchmesser und gemäß der Baulänge, wie beschrieben ist dies nach Stand der Technik üblich. In Figur 21 wird skizziert gezeigt, wie die Segmentanzahl zusätzlich die Baugrößenabstufung eines Baukastens bei feststehender Durchmesserreihe durch nun mögliche zusätzliche Addition der Teilsegmente bis zum Vollkreis skaliert und damit die Leistung variiert.

Die erfindungsgemäße Elektromaschine erhält zunächst eine spezifische Zahn- und Pol- bzw. Polpaardimensionierung, diese ist abhängig von der Drehzahlauslegung bzw. dem bevorzugten Drehzahlbereich und Spannungsbereich bei dem die Maschine betrieben werden soll. Üblicherweise wird die elektrodynamische Auslegung bei diesem Betriebspunkt als Nennbetriebspunkt im Sinne der Drehzahl, des Drehmomentes und der Leistung bezeichnet. Diese Größen sind im klassischen Fall nicht unabhängig voneinander, sie stehen in einem Zusammenhang. Eine Drehzahlverringerung kann bei konstantem Moment nicht ohne eine zwingende Verminderung der Leistung erfolgen. Auch wird sich die Polwechselfrequenz der Maschine mit der Drehzahl verringern. Soll jedoch die pro Poldurchgang induzierte Tangentialkraft erhöht werden, ist dies notwendigerweise mit einer Erhöhung von Strom und Spannung verbunden und erhöht damit die Ausnutzung.

Die ausgelegte Pol- und Zahnstruktur lässt sich je nach Verschaltung zu Statorsegmentblöcken zusammenstellen. Sie lassen sich jeweils wiederum modular aufaddieren und ergeben in Summe die gewünschte oder nötige Luftspalttangentialkraft, die zusammen mit dem Wirkdurchmesser am Ringläufer und dessen Drehzahl die Antriebsleistung bildet. Dadurch lässt sich die Leistung ohne Änderungen der Bauausführung einzelner Baugruppen durch Summation skalieren und es kann ein Baukasten für verschiedene Leistungsklassen aufgebaut werden, wie es Figur 21 darstellt. Der Baukasten ist dann gültig für abgestufte Läuferringdurchmesser, wobei die Nutweiten und Windungszahlen der Statorzähne auf weiteren Durchmesser übertragen werden können, wobei dann die Polabstände des Läufers ganzzahlig auf die Umfangslänge übertragbar sein müssen. Die ganzzahligen Abstufungen benötigen eine sinnvolle Zahlenabstufung, die zur verwendeten Phasenzahl passen muss. Tabelle 1 zeigt ein Beispiel mit einem dreiphasigen Wicklungssystem und einer beispielhaft gewählten Zähnezahl von 9 pro Segment in seiner Leistungsaufteilung (in Kilowatt [kW]). Wie beschrieben ist auch eine andere Zähnezahlabstufung als 9 pro Segment möglich.
Die Umfangsgeschwindigkeit, die Zahn- und Polweite, die Essonsche-Leistungsziffer (Drehschub) und die Umrichterfrequenz werden als Konstanten gemäß der Vorauslegung definiert. Die Bautiefe kann auf einen gewünschten Wert festgelegt werden und später als Variable angepasst an den Leistungsbedarf abgestuft werden. Die Zähnezahl als abgestufte Konstante für das hier dreiphasige Wicklungssystem kann gemäß der Wicklungsverschaltung angesetzt werden und ergibt dann die Segmentabstufung (hier beispielhaft 9).
Die Zähnezahl über den Umfang ergibt zusammen mit der Segmentaufteilung eine konstante Zahnteilung für alle Durchmesserreihen. Die Zahn- und Polweite aus der Basisauslegung ist zusammen mit der erreichbaren Essonschen-Leistungsziffer der Maschine die maßgebende Konstante für den Baukasten.

**Tabelle 1: Baukastenabstufung in Leistung [kW] angegeben**

| **Leistung** | **[kW]** | | | | | | | | | | |
|---|---|---|---|---|---|---|---|---|---|---|---|
| Zähnezahl [z] | Durchmesser [m] | 1 Segment | 2 | 3 | 4 | **5** | **6** | **7** | **8** | UPM [1/min] | Bautiefe (konst) |
| 9 | 0,0375 | **0,22** | | | | | | | | 2999,8 | a |
| 18 | 0,075 | **0,44** | **0,88** | | | | | | | 1499,9 | a |
| 27 | 0,1125 | **0,66** | **1,33** | **1,99** | | | | | | 999,9 | a |
| 36 | 0,150 | **0,88** | **1,77** | **2,65** | **3,54** | | | | | 749,9 | a |
| 45 | 0,188 | **2,21** | **4,42** | **6,63** | **8,84** | **11,0** | | | | 600,0 | 2a |
| 54 | 0,225 | **2,65** | **5,30** | **7,95** | **10,61** | **13,2** | **15,9** | | | 500,0 | 2a |
| 63 | 0,263 | **3,09** | **6,19** | **9,28** | **12,37** | **15,4** | **18,5** | **21,6** | | 428,5 | 2a |
| 72 | 0,300 | **3,54** | **7,07** | **10,6** | **14,14** | **17,6** | **21,2** | **24,7** | **28,2** | 375,0 | 2a |

Wie bereits ausgeführt verdop- pelt sich bei zwei Segmenten im Vergleich zu einem die Leistung, bedingt durch die Addition der Segmentfläche in einer Durchmesserreihe.

Die Tabelle 2 zeigt in ebenso nicht limitierender Form die erfindungsgemäße, beispielhafte Ausführung eines Baukastens basierend auf den genannten Elementen in der möglichen Abstufung aus Tabelle 1 in seiner Drehmomentaufteilung (Newtonmeter [Nm]).

**Tabelle 2: Baukastenabstufung in Drehmoment [Nm] angegeben**

| **Drehmoment** | **kNm** | | | | | | | | | |
|---|---|---|---|---|---|---|---|---|---|---|
| Zähnezahl [z] | Durchmesser [mm] | 1 Segment | 2 | 3 | 4 | 5 | 6 | 7 | 8 | UPM [1/s] |
| 9 | 0,0375 | **0,001** | | | | | | | | 2999,8 |
| 18 | 0,075 | **0,003** | **0,006** | | | | | | | 1499,9 |
| 27 | 0,1125 | **0,006** | **0,013** | **0,019** | | | | | | 999,9 |
| 36 | 0,150 | **0,011** | **0,023** | **0,034** | **0,045** | | | | | 749,9 |
| 45 | 0,188 | **0,035** | **0,070** | **0,106** | **0,141** | **0,17** | | | | 600,0 |
| 54 | 0,225 | **0,051** | **0,101** | **0,152** | **0,203** | **0,25** | **0,30** | | | 500,0 |
| 63 | 0,263 | **0,069** | **0,138** | **0,207** | **0,276** | **0,34** | **0,41** | **0,48** | | 428,5 |
| 72 | 0,300 | **0,090** | **0,180** | **0,270** | **0,360** | **0,45** | **0,54** | **0,63** | **0,72** | 375,0 |

Wie ebenfalls bereits ausgeführt führt die Durchmessererhöhung zur Erhöhung des drehmomentbildenden Hebelarms und zur Reduktion der Drehzahl, bei Steigerung des Drehmomentes abhängig zur Bautiefe.
Die segmentierte Bauform der ringförmigen Reluktanzmaschine ermöglicht bei erfindungsgemäßer einmaliger Auslegung einer Zahn- und Polgeometrie eine Baukastenmethodik und einen Modulbau in Bezug auf diesen dann normierten Pol und einen ebenso im Sinne der Statorblöcke normierten Umrichter mit einer Skalierbarkeit auf mehrere Leistungsgrößen und Drehmomentklassen, aber auch einen nach heutigen Maßstäben vollständigen Serienbau der Einzelmodule. Es ergibt sich wie in Tabelle 1 und 2 angegeben eine sehr hohe Zahl an Motorvarianten, die trotz Gleichteilen eine Abstufung von Drehmoment, Leistung und Drehzahl der möglichen Motoren darstellt, wie sie für vielfältige Applikationen benötigt werden.

Radantriebe, Lüfterräder, Lüf- terwalzen, Drehtische, Rohrmühlen, Rohröfen, Windturbinen, Strömungsmaschinen können innerhalb eines breiten Leistungsbereiches innerhalb eines elektrischen Spannungsniveaus mit einer Polauslegung auf ein komplettes Baukastensystem reduziert werden.

Die Statorsegmente enthalten in ihrer modularen Bauweise eine prinzipbedingte Leistungsaufteilung, die jeweils passend zu einem oder mehrerer Umrichtermodule aufgebaut sein kann.
Die Umrichtermodule müssen erfindungsgemäß mittels einem Bussystems oder eine externen Synchronisierungsschnittstelle derart miteinander verbunden sein, dass sie eine abgestimmte Phasenbestromung der Reluktanzpole darstellen können und ein gleichmäßiger Drehmomentverlauf in Addition aller verschalteten Pole erzeugt wird.
Die Umrichter können maschinenseitig 1 oder mehr Phasen enthalten, weiterhin netzseitig bevorzugt 1 oder 3-phasig sein. Der elektrische Winkel zwischen den Statorblöcken kann dazu benutzt werden, um den Läufer in seiner Ausrichtung zu den Statorpolen mechanisch zu verspannen, hierdurch können z.B. Pendelmomente beeinflusst werden
Mit einem modularen Elektromaschinen- und Umrichterkonzept könnte die Maschine bei geringwertigem Modulausfall weiter betrieben werden, wenn es aufgrund der Modulgröße nicht zu einem Ungleichgewicht im Kraftfluss führt, was eine reine Frage der Modulgrößenabstaffelung ist. Die Stillstandszeiten aufgrund eines heutigen Hauptkomponentenausfalls würden erfindungsgemäß weitgehend vermieden werden.
Weiterhin kann erfindungsgemäß eine Verformungskompensation des doppelten Luftspaltes erfolgen, indem die Umrichter den Luftspalt im Betrieb nachregeln und entweder stromauslastungsneutral, kraftneutral oder aber lageneutral regeln. Hierzu und zur typischen Drehmomentregelung einer Reluktanzmaschine sind die Einzelumrichter mittels eines Kommunikationsprotokolls miteinander verschaltet, so dass sie ihre Ansteuerung der Spulen und Pole untereinander synchronisieren können.

Die elektrotechnische Auslegung der Baukastenmaschine liegt wie beschrieben prinzipgemäß vollständig als skalierbarer und segmentierter Modulsatz vor. Hierdurch kann eine vielfältige aber in der Bauteilvariantenkomplexität stark vereinfachte und damit kostengünstige Applikation im Bereich des Sondermaschinebaus erfolgen, da die Individualisierung der Maschine im einfachen Stahlbau erfolgen kann. In einer geeigneten Ausgestaltung wird die Tragstruktur des Läufers in die Tragstruktur der Sonderapplikation integriert, da erfindungsgemäß die Einzelbaugruppen der Zahnspulen und der Umrichter modular ausgeführt sind und in hohem Maße flexibel als Baukasten verwendet werden können. Die Integration führt zu einer erheblichen Kosteneinsparung im Antriebstrang, dieser mag für eine Rohrmühle, einen Mahlteller, einen Radnabenantrieb, eine Dreh-Kipptisch oder eine anderweitig verwendete motorische oder generatorische Rotationsmaschine sinnvoll sein.
Hierbei sollte konsequent auf den Kraftfluss der Applikation geachtet werden, kostenintensive Baugruppen werden durch eine Doppelverwendung in ihrem Einfluss minimiert. Das Hauptlager kann weiterhin klassisch als Fest-Loslagerung oder Momentenlagerung ausgebildet sein, die Hauptwelle könnte allerdings zusätzlich noch drehmomentfrei gehalten werden, wenn z.B. eine Mühle mit äußerem Antrieb am ohnehin vorhandenen Mahlteller aufgebaut wird.
Die Kühlung könnte innerhalb eines Gehäuses u.U. weitgehend passiv aufgebaut werden, da der Läufer eine Kühlung für die Statorsegmente bewirkt, die durch eine geeignete Zu- und Abluftführung und Luftführung außen um die Statorsegmente herum noch unterstützt werden kann und auch weitere Maschinenkomponenten kühlen kann.

In einer weiteren Ausgestaltung der Erfindung ist es von Vorteil, wenn die Umrichter unabhängig voneinander, aber dennoch sychronisierbar motorisch und generatorisch betrieben werden können. Dadurch wird es erfindungsgemäß ermöglicht eine Maschine in einer internen Leistungsrückführung zu betreiben, was bei einer Systemprüfung, einen Modultest oder einer Sonderanwendung von Vorteil ist, da hier keine externe Prüfmaschine benötigt wird. Die erfin- dungsgemäß interne Leistungsverzweigung führt dazu, dass die Maschine unter Drehmoment, bzw. unter Leistung gefahren werden kann, ohne eine extern dementsprechend dimensionierte Antriebsmaschine und Drehmomentabstützung auf einem Plattenfeld zu benötigen. Dies führt gerade bei Sondermaschinen im hohen Leistungsbereich, die mehrere Meter Durchmesser haben können, zu erheblichen Einsparungen für die Systemprüfung. Da die interne Tragstruktur der Maschine den Leistungsfluss Prinzip bedingt und auslegungsbedingt ertragen muss, reicht eine externe Fixierung als Standsicherung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung einer Baugrößenabstufung für eine elektrische Maschine in Form einer Ringmaschine für den Umrichterbetrieb in Ausführung einer Reluktanzmaschine, die als geschaltete oder Synchronreluktanzmaschine betrieben wird, bei der ein segmentierter Stator den segmentierten Ringläufer nur partiell zum Umfang umgibt, der Läufer also nicht vollumfänglich umfasst wird, die Anordnung der Statorausführung in radialer oder axialer oder kombinierter Ausführung gegenüber der Läuferstruktur gebildet wird, die Wicklungen in Zahnspulenausführung oder verteilter Ausführung alleinig auf den Statorbereich ausgeführt sind,
**dadurch gekennzeichnet, dass**
die Staffelung des dazugehörigen Baukastens in Größenabstufungen in den drei Dimensionen der Baukastenbildung Luftspaltdurchmesser, axiale Baulänge und Statorsegmentanzahl erfolgt.

2. Anordnung von Baureihen einer Ringmaschine nach Anspruch 1, **dadurch gekennzeichnet, dass** durch Beibehalten der Auslegungsumfangsgeschwindigkeit für eine Polweitenauslegung und eine dazugehörige konstante Nutbreite, die Drehmomentsteigerung durch ganzzahlige Vergrößerung der Polzahl des Läuferdurchmesser und ganzzahliges Aufaddieren der verwendeten Statornuten bewirkt wird, die sich im Sinne einer gewünschten Verschaltung als Gleichteil in einem Statorsegment über mehrere Durchmesserstufen des Baukastens aufaddiert wieder finden lassen.

3. Anordnung von Baureihen einer Ringmaschine nach einem der vorherigen Ansprüche, **dadurch gekennzeichnet, dass** durch Bestücken des Läufers in Teilen des Umfangs aus in Statorsegmenten abgestuften Zahnanordnungen gleicher Zahnzahl die Leistung der Baureihe abgestuft wird.

4. Anordnung von Baureihen einer Ringmaschine nach einem der vorherigen Ansprüche, **dadurch gekennzeichnet, dass** durch Aufaddieren von axialen Läufer- scheiben die Leistung abstaffelt wird.

5. Anordnung von Baureihen einer elektrischen Maschine nach einem der vorherigen Ansprüche, **dadurch gekennzeichnet, dass** die Statorelemente der ausgeführten Maschinen mit teilbestückten Statorplätzen je Durchmesserreihe symmetrisch oder unsymmetrisch auf den Umfang verteilt sind.

6. Baukasten für eine elektrische Ringmaschine nach Anspruch 1, **dadurch gekennzeichnet, dass** der Läuferring in scheibenförmiger oder trommelförmiger Ausführung aus einem Läufertragring und Läufersegmenten besteht und dessen Rotorblechstruktur in Umfangslänge ebenfalls in Segmente aufgeteilt ist, sich dadurch Ausnehmungen zwischen den Segmenten bilden und dadurch die thermische Dehnung (Wärmegang) im Luftspaltdurchmesser auf ihre Wirkung auf den Außendurchmesser entkoppelt wird.

7. Baukasten für eine elektrische Ringmaschine nach Anspruch 1, bei dem die Wärmegangs-Entkopplung innerhalb der Tragstruktur des geblechten Läufers als schlitzförmige und/oder bohrungsförmige Ausnehmung zur Reduzierung der Auswirkung der thermischen Ausdehnung der Läuferbleche in Umfangsrichtung angebracht sind

8. Baukasten für eine elektrische Ringmaschine nach Anspruch 1, bei dem eine thermische Isolierung zwischen der Tragstruktur und der geblechten und segmentierten Läuferstruktur angeordnet ist und gleichzeitig als elektrische Isolierung wirkt und die thermische Ausdehnung der Läuferbleche in Umfangsrichtung durch die Ausnehmung zwischen den Läufersegmenten aufgefangen wird.

9. Baukasten für eine elektrische Ringmaschine nach einem der vorherigen Ansprüche, bei dem mittels einer doppelwirkenden Anordnung der Statorausführung des mindestens einen Statorblocks in radialer oder axialer oder kombinierter Ausführung gegenüber der Läu- ferstruktur einen Kraftausgleich in radialer Richtung im doppelten Luftspalt bewirkt wird.

10. Baukasten für eine elektrische Ringmaschine nach einem der vorherigen Ansprüche, bei der eine Anzahl von maschinenseitigen Umrichterkreisen auf eine Anzahl von unabhängigen Phasen bei einem oder mehreren Statorsegmenten der Ringmaschine verschaltet werden, so dass bei Synchronisation der Phasenbestromung eine geeignete Stromführung zum Kraftausgleich der doppelseitigen oder gegenüberliegenden Luftspaltstatorseiten kommt, der lageneutral, positionsneutral oder kraftneutral sein kann, und / oder eine dynamischen Regelung der torsionalen Eigenschaften der Ringmaschine bewirkt.

11. Baukasten für eine elektrische Ringmaschine nach einem der vorherigen Ansprüche, bei der eine Anzahl von maschinenseitigen Umrichterkreisen auf eine Anzahl von unabhängigen Phasen bei einem oder mehreren Statorsegmenten der Ringmaschine verschaltet werden, so dass bei Synchronisation der Phasenbestromung ein Betrieb mit innerer Leistungsverzweigung möglich ist, bei dem ein Teil der Umrichterkreise motorisch und ein weiterer Teil der Umrichterkreise generatorisch arbeiten, so dass es über den Zwischenkreis zu einem Austausch der elektrischen Leistung kommt und die Verlustleistung über den netzseitigen Umrichter zugeführt werden kann.

12. Baukasten für eine elektrische Ringmaschine nach einem der vorherigen Ansprüche, bei dem eine zusätzliche Unterstützung der Flussbildung der Maschinen durch PM-Magnete im Stator oder Läufer erfolgt.
